# EUROPEAN PATENT APPLICATION

(11) **EP 1 249 747 A1**
(43) Date of publication of application: **16.10.2002**
(21) Application number: 01660063.7
(22) Date of filing: 09.04.2001
(51) Int. Cl.: G05B 19/414

(54) **Control system and method for controlling processes**

(71) Applicant: Patria Ailon, 33100 Tampere (FI)
(72) Inventor: Myllymäki, Juhani, 33720 Kangasala (FI); Saarimäki, Ville, 33210 Tampere (FI)
(74) Representative: Pursiainen, Timo Pekka

(57) **Abstract**

The invention relates to a control system for process control comprising at least one process control system, which comprises a field bus (FB), at least one process control device (PCD) communicating with the field bus (FB), and at least one field bus controller (FBC) communicating with said at least one process control device (PCD) via said field bus (FB) using a field bus protocol, said control system further comprising at least one client (OPC1, OPC2, OPCn) providing access to control the process control devices (PCD) using a control protocol, and a network (NW). The control system further comprises a server device (SD) communicating with said at least one field bus controller (FBC) via said network (NW) using a network protocol, and with said at least one client (OPC1, OPC2, OPCn) using the control protocol. The control system also comprises means for transferring information according to the field bus protocol between said at least one field bus controller (FBC) and said server device (SD) in network protocol messages, and means for performing conversion between said network protocol messages and the control protocol.

## Description

### Technical field

The present invention relates to a control system for process control comprising at least one process control system, which comprises a field bus, at least one process control device communicating with the field bus, and at least one field bus controller communicating with said at least one process control device via said field bus using a field bus protocol, said control system further comprising at least one client providing access to control the process control devices using a control protocol, and a network. The invention further relates to a method for controlling processes, in which at least one process control system is used comprising a field bus, at least one process control device communicating with the field bus, and at least one field bus controller communicating with said at least one process control device via said field bus using a field bus protocol, in which method at least one client is used for providing access to control the process control devices using a control protocol, and a network.

### Discussion of the related art

Many distributed process control systems have recently been developed. Some of them are designed for factory area controlling operations, wherein process control devices communicate via a field bus with a field bus controller, which further communicates with a control station via another communication bus. The process control devices can therefore be controlled by the control station. This kind of control system needs an appropriate wiring to be installed in the factory.

Such distributed control systems are also known which can facilitate the modifications to a control system by taking the advantage of existing communication networks, such as Internet. This method makes it possible to connect distributed process control devices with a centralized control station. The process control devices can be situated even in different geographical areas, for example, in different areas of a city or even in different cities. One example of this kind of system is based on so called OPC (OLE for Process Control) technique, which is under development and which provides a definition of interface for communication between field bus controllers and a control station of a distributed control system. OLE (and its Component Object Model) provide a basis for application interoperation in the Microsoft Windows® based operating system environment.

Object Linking and Embedding (OLE) is a compound document standard developed by Microsoft Corporation. It enables a creation of objects with one application and linking or embedding them in a second application. Embedded objects retain their original format and links to the application that created them. OLE defines the Component Object Model, which specifies a programming-language-independent binary standard for object implementations (i.e., it specifies what the implementation of the objects has to look like). In the Component Object Model, the concept of interface has great importance. An interface in this connection means a set of semantically related functions implemented on an object. For example, an implementation of an interface can be an array of pointers to functions. Any program code that has a pointer to that array can call the functions in that interface. A Windows Object implements one or more interfaces, i.e., provides pointers to function tables for each supported interface. The OPC is based on component object model (COM) and distributed COM (DCOM) from Microsoft Corp which enable communication between separate software components. The OPC consists of OPC client and OPC server. The OPC server provides interface between the hardware of the field bus controller and the communication software, wherein the OPC client can read information from the field bus controller and transmit information to the field bus controller via the OPC server.

In the control station is an OPC client control module for managing the process control devices of the system and displaying information which is read from the process control devices via the field bus controller. The client control module have to be capable of forming a data transfer connection to the field bus controllers. Therefore, each field bus controller has a unique address (IP address) to distinguish it from other devices connected to the Internet network. The messages which are communicated between the field bus controllers and one or more control station are standard TCP/IP messages which among other things comprise source address (the IP address of the sender of the message), destination address (the IP address of the intended recipient of the message), and payload data. The payload data comprises the OPC compliance information. To be able to perform necessary control operations the client control module of the control station needs to know address information of all the field bus controllers of the control system. There can exist a large amount of field bus controllers and their address may change (because of modifications of the control system) wherein the management of the control system may become very demanding or even overwhelming. One further requirement to the IP address of the field bus controller in prior art systems is that the address has to be fixed.

The control station has to be able to establish a connection to the field bus controllers in the above mentioned distributed control system. The use of network address translation (NAT) by routers and firewalls in the Internet may make the connection establishment from the control station impossible. Network address translation is a method of connecting multiple computers to the Internet (or any other IP network) using one IP address. This allows home users and small businesses to connect their network to the Internet cheaply and efficiently. The network address translation is also used, for example in the firewalls, to hide the real IP address to hinder possible intruders from accessing to the system.

There are several disadvantages in prior art systems and methods presented above. For example, the OPC server and all the necessary operating system resources that the OPC server needs have to be installed into the field bus controller which means that the amount of the software of the field bus controller becomes quite massive. This increases the software and hardware costs of the field bus controller significantly. This increases also the maintenance costs. The use of OPC server induces that also a certain operating system has to be used in the field bus controller. Further, the OPC client needs to know exactly, which information can be found in which address, and the OPC clients may have to collect such information from many different places which can be time consuming.

In control systems which use Internet to transfer information between field bus devices and control station it is very important to pay attention to data security because the potential for eavesdropping is great when transmitting unencrypted information via Internet has. However, it is not easy to configure firewalls for protecting the communication via Internet in prior art control systems.

### Objectives and summary of the invention

It is thus an object of this invention to provide a control system and method for process control, in which the field bus controllers can be simpler and cheaper than in prior art systems and methods. The present invention is based on the idea that control system dependent signals are tunnelled on TCP/IP protocol messages which are communicated between the field bus controllers and a server which is in the network, wherein transformation between device dependent information and OPC based information is performed in a centralized manner in the server. A system according to a first embodiment of the present invention is characterized by that the control system further comprises:
- a server device communicating with said at least one field bus controller via said network using a network protocol, and with said at least one client using the control protocol,
- means for transferring information according to the field bus protocol between said at least one field bus controller and said server device in network protocol messages, and
- means for performing conversion between said network protocol messages and the control protocol.

A method according to the present invention is characterized by that a server device is communicating with said at least one field bus controller via said network using a network protocol, and with said at least one client using the control protocol, information is transferred according to the field bus protocol between said at least one field bus controller and said server device in network protocol messages, and conversion between said network protocol messages and the control protocol are performed.

The present invention provides significant advantages over prior art systems and methods. The field bus controllers can be implemented with less software and hardware resources than in prior art systems. Further, the production costs of the field bus controllers can be reduced by using the method according to the invention. The operating system for the field bus controller can be selected more freely in the control systems according to the invention. Also savings can be achieved in installing, management and maintenance of the control system. The present invention does not restrict the selection of the data security solutions for the control system either.

The OPC server is not needed in the field bus controllers wherein only one (or two) OPC server is needed in the whole control system.

This kind of arrangement provides the advantage that the OPC server and respective operating system are not needed in the field bus controller, wherein the operating system of the field bus controller can be selected more freely than in prior art systems. The operating system to be used can then be an operating system directed to control solutions and embedded systems.

### Brief discussion of the drawings

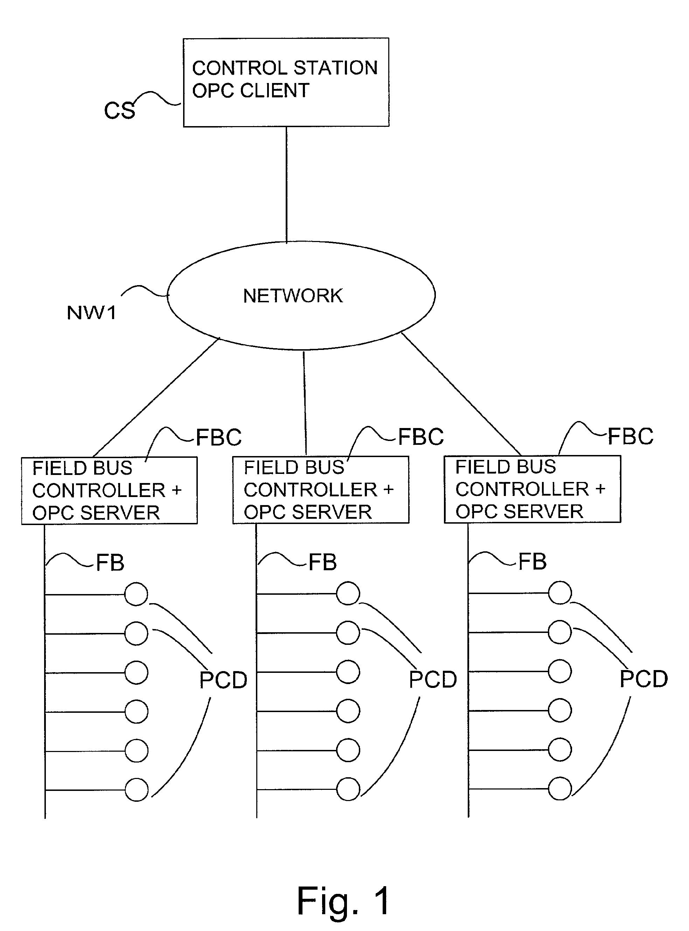

The invention will now be described in more detail in the following with reference to the appended figures, in which
- Fig. 1: shows a prior art control system in which the method according to a preferred embodiment of the invention can be applied,
- Fig. 2: shows as a simplified block diagram a control system according to a preferred embodiment of the invention, and
- Fig. 3: shows as a simplified data flow diagram a control system according to an advantageous embodiment of the invention.

### Detailed description of the invention

In the following the invention is described in a control system 1 in which OPC technique is applied and Internet is used as a first network NW1 but the invention is not limited to that kind of systems only.

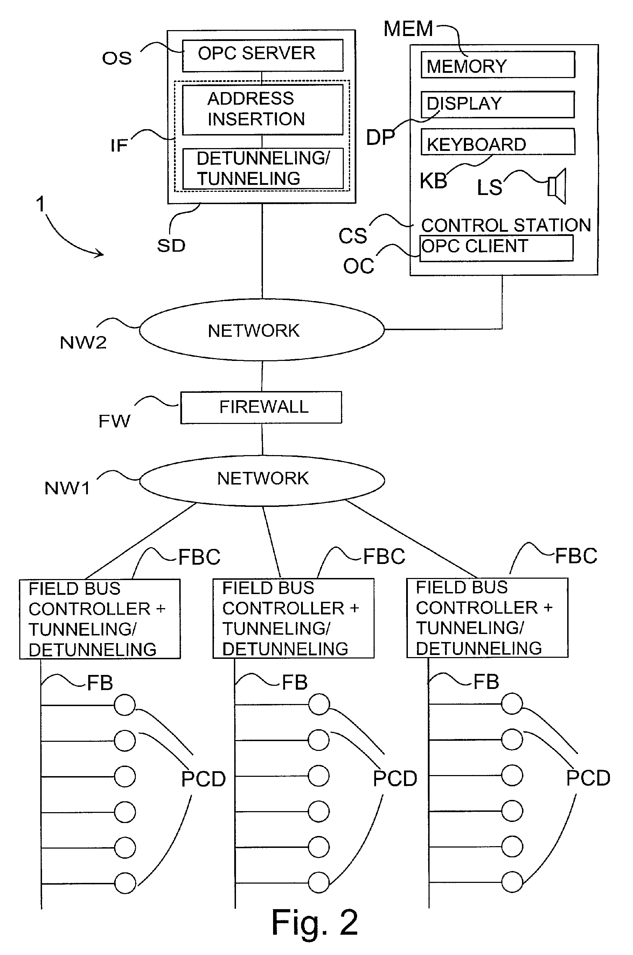

Fig. 2 is a simplified block diagram of a control system 1 according to a preferred embodiment of the present invention. It comprises one or more field buses FB, in which process control devices PCD are connected. The field buses FB of the control system need not to be similar but they can also be different field buses such as LON (Local Operating Network), Profibus, and/or CAN (Controller Area Network). The process control devices PCD are control equipment such as sensors, actuators and controllers and which are provided with means for interfacing with a process to be controlled. The process can be *e.g.* a paper machine, a power plant, a home automation system, etc. The means for interfacing with the process may vary depending on the process. For example, they may be measuring means to measure *e.g.* temperature, pressure, humidity, speed, etc. and/or controlling means to control different parameters, *e.g.* speed of a motor, temperature of a heating system, pressure of a fluid, etc.

The field bus controllers FBC communicate with the process control devices to read information (*e.g.* measurement) from them and to write information (*e.g.* new parameter values) into them. The field bus controllers FBC also communicate with the control station CS via the first network NW1 and a second network NW2. In this advantageous embodiment of the present invention a firewall FW is provided between the first network NW1 and the second network NW2. The first network NW1 is *e.g.* Internet and the second network NW2 is *e.g.* Intranet. Information collected from process control devices PCD can be provided to control room personnel as a visible and/or audible information. Visible information can be displayed on a display DP of the control station CS and audible information can be directed to *e.g.* a loudspeaker LS. The collected information or part of it can also be stored into memory means MEM, which can comprise semiconductor memory, such as RAM and/or EEPROM, hard disk, CDROM, digital versatile disk (DVD), etc. The control room personnel can control the process, for example, by changing parameters of the process control devices by a keyboard KB of the control station. The new control values are then transferred via the second network NW2, the firewall FW and the first network NW1 to that field bus controller FB which controls the process control device PCD in question and delivers the information to the device.

In the following, the communication between the field bus controller FBC and the control station CS according to a preferred embodiment of the present invention will be described in more detail. In a situation in which there is information to be transmitted from a field bus controller to the control station CS the field bus controller FCB performs so called tunnelling operation to the information to be transmitted. This means that the field bus controller FCB forms one or more packets from the information, *i.e.* frames which comprise one or more headers, payload and check sum field(s), if necessary. The payload field comprise the actual information to be transmitted. In this situation the payload field can comprise field bus protocol form data or field bus control related data of the field bus in question. Therefore the format of the payload information may vary depending on the field bus from which the information is to be transmitted. The field bus controller inserts necessary addressing information into the header field: destination address, source address, destination port number, and source port number. The destination address is the IP address of the OPC server, which preferably is fixed. The source address is the IP address of the field bus controller, which may be dynamic or fixed. The packets are, for example, TCP/IP packet which are transmitted from the field bus controller to the first network NW1. In the first network NW1 the packets are routed according to the destination address to be delivered via the firewall FW to the server device SD which comprises the OPC server in the second network NW2. The server device SD receives the packets and detaches the payload information from the packets.

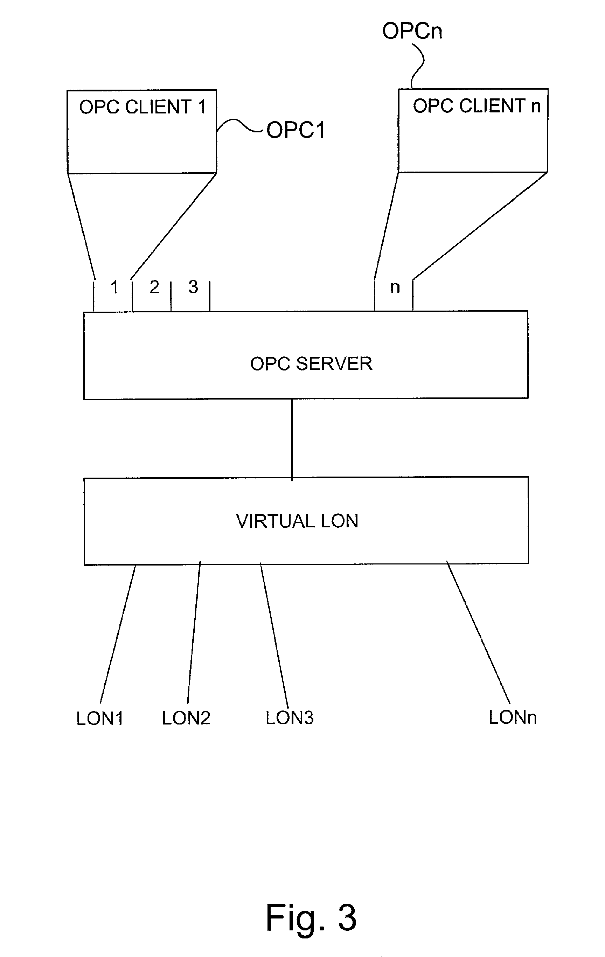

The server device SD is provided with interface means IF which perform tunnelling/detunneling and interfacing between the field bus protocol and the OPC standard. The received field bus information is then transformed into format according to the OPC standard and identification information of the source of the information is added. The interface means IF also performs combining of information from different field buses. Information can then be transferred between the OPC server and the OPC client(s) via the interface means IF. After that the OPC server OS of the server device SD and the OPC client OC of the control station CS can communicate to read the information to the control station CS. The control station CS may situate in a different place from the server device SD. The control station CS can have access to the server device SD *e.g.* via the network NW wherein the OPC server of the server device SD and the OPC client of the control station CS can communicate according to the OPC standard. There may exist many OPC clients for different purposes. Normally the OPC clients are not allowed to have access to all the information the OPC server has but only to information from a certain field bus controller, or only to part of it. For example, one OPC client may be provided to display information of a certain measurement wherein that OPC client can have access to only that information in the OPC server. This situation is shown in Fig. 3 in which there are separated information areas A1, A2, An for different OPC clients OPC1, OPC2, OPCn. The information areas A1, A2, An can be *e.g.* different memory areas of the server device SD. The OPC server sees then only one field bus although there may exist many different field buses.

To provide control operations on the process control devices the OPC client can form a connection for controlling the devices. If the OPC client is not in the same host than the OPC server, the connection can be formed *e.g.* via the second network NW2, which is *e.g.* Intranet. The OPC client contacts the OPC server by using the address of the OPC server and uses messages according to OPC standard. The OPC client transfers the modified value(s) to the OPC server, which provides that/them further to the interface means IF and adds necessary identification information. Then, the interface means IF determines the destination field bus in which the process control device to be controlled exists. According to the determination the interface means IF performs the tunnelling of the information on TCP/IP packets and includes necessary addressing information into the TCP/IP packets. These TCP/IP packets are routed through the network NW to the correct field bus controller FCB. The field bus controller FCB forwards this information to that process control device PCB in which the value(s) is/are modified.

It is also possible to use data security operations in connection with control systems of the present invention. All the devices which are communicating via Internet can also have a firewall installed. That is possible because the addresses of the field bus controllers need not to be fixed and the network address translation is allowed. This has the effect that all the communication between the field bus controllers and OPC server and, if necessary, between OPC clients and OPC server goes through the firewall which may also perform encrypting/decrypting of the information. All the other aspects of the invention remains substantially the same. Therefore, the communication security can be higher in the control system according to the present invention than in prior art control systems.

As a conclusion from the above the present invention provides a method and a system in which different field buses can be combined into one virtual field bus. The implementation of the field bus controllers is easier and cheaper than in prior art systems. The operating system to be used in the field bus controllers can be selected quite freely, for example Linux operating system, which is cheap or even free of charge, can be used, or an operating system directed to control solutions and embedded systems can also be used. It is also possible that different field bus controllers can have different operating systems.

There are many application areas in which the present invention can be applied. For example, factory automation, power plant automation for local and national electricity production systems, home automation, sub urban systems for maintenance services, etc.

The present invention is not limited to the above described embodiments only, but it can be varied within the scope defined by the attached claims.

## Claims

1. A control system for process control comprising at least one process control system, which comprises a field bus (FB), at least one process control device (PCD) communicating with the field bus (FB), and at least one field bus controller (FBC) communicating with said at least one process control device (PCD) via said field bus (FB) using a field bus protocol, said control system further comprising at least one client (OPC1, OPC2, OPCn) providing access to control the process control devices (PCD) using a control protocol, and a network (NW), **characterized in that** the control system further comprises:
- a server device (SD) communicating with said at least one field bus controller (FBC) via said network (NW) using a network protocol, and with said at least one client (OPC1, OPC2, OPCn) using the control protocol,
- means for transferring information according to the field bus protocol between said at least one field bus controller (FBC) and said server device (SD) in network protocol messages, and
- means for performing conversion between said network protocol messages and the control protocol.

2. A system according to claim 1, **characterized in that** said server device (SD) and at least one client (OPC1, OPC2, OPCn) are formed in a same device.

3. A system according to claim 1, **characterized in that** said server device (SD) and at least one client (OPC1, OPC2, OPCn) are formed in separate devices, and that they are arranged to communicate via said network (NW).

4. A system according to claim 1, 2 or 3, **characterized in that** said control protocol is based on OLE for Process Control.

5. A system according to any of claims 1 to 4, **characterized in that** said process control system is an industrial process control system.

6. A system according to any of claims 1 to 4, **characterized in that** said process control system is a home automation system.

7. A method for controlling processes, in which at least one process control system is used comprising a field bus (FB), at least one process control device (PCD) communicating with the field bus (FB), and at least one field bus controller (FBC) communicating with said at least one process control device (PCD) via said field bus (FB) using a field bus protocol, in which method at least one client (OPC1, OPC2, OPCn) is used for providing access to control the process control devices (PCD) using a control protocol, and a network (NW), **characterized in that** a server device (SD) is communicating with said at least one field bus controller (FBC) via said network (NW) using a network protocol, and with said at least one client (OPC1, OPC2, OPCn) using the control protocol, information is transferred according to the field bus protocol between said at least one field bus controller (FBC) and said server device (SD) in network protocol messages, and conversion between said network protocol messages and the control protocol are performed.

8. A method according to claim 7, **characterized in that** TCP/IP is used as the network protocol.

9. A method according to claim 7 or 8, **characterized in that** OLE for Process Control is used as the control protocol.

10. A method according to claim 7, 8 or 9, **characterized in that** it is utilized for controlling industrial processes.
